# EUROPÄISCHE PATENTANMELDUNG

(11) **EP 1 231 696 A2**
(43) Veröffentlichungstag der Anmeldung: **14.08.2002**
(21) Anmeldenummer: 01129050.9
(22) Anmeldetag: 07.12.2001
(51) Int. Cl.: H02J 7/00

(54) **Vorrichtung und Verfahren zur Reduzierung des Ruhestromverbrauchs in einem abgestellten Fahrzeug**

(30) Priorität: 10.02.2001 DE 10106239
(71) Anmelder: AUDI AG, 85045 Ingolstadt (DE)
(72) Erfinder: Regler, Richard, 85135 Titting (DE); Köhler, Karl-Heinz, 85057 Ingolstadt (DE); Kreipp, Alfons-Martin, 91171 Greding (DE)

(57) **Zusammenfassung**

Die Erfindung betrifft eine Vorrichtung zur Reduzierung des Ruhestromverbrauchs in einem abgestellten Fahrzeug, wobei die Vorrichtung ein Steuerelement (18) zur Kontrolle eines Betriebszustands mindestens eines elektrischen Verbrauchers (24, 28) aufweist, wobei in dem Steuerelement (18) eine Befehlssequenz abgelegt ist, durch die der mindestens eine elektrische Verbraucher (24, 28) von einem Standardbetriebszustand in einen Betriebszustand mit einem geringeren Stromverbrauch und/oder in einen ausgeschalteten Zustand überführbar ist, wobei die Vorrichtung ein Telematikmodul (14) aufweist, das eine Empfangseinheit (12) umfaßt, durch die von einem externen Sender (30) ein Signal empfangbar ist, wobei das Telematikmodul (14) durch den Empfang des Signals aktivierbar ist, wobei das Steuerelement (18) durch das aktivierte Telematikmodul (14) aktivierbar und die in dem Steuerelement (18) abgelegte Befehlssequenz durch das aktivierte Steuerelement (18) ausführbar ist. Die Erfindung betrifft auch ein entsprechendes Verfahren.

## Beschreibung

Die vorliegende Erfindung betrifft eine Vorrichtung zur Reduzierung des Ruhestromverbrauchs in einem abgestellten Fahrzeug, wobei die Vorrichtung ein Steuerelement zur Kontrolle eines Betriebszustands mindestens eines elektrischen Verbrauchers aufweist, wobei in dem Steuerelement eine Befehlssequenz abgelegt ist, durch die der mindestens eine elektrische Verbraucher von einem Standardbetriebszustand in einen Betriebszustand mit einem geringeren Stromverbrauch und/oder in einen ausgeschalteten Zustand überführbar ist. Die Erfindung betrifft auch ein entsprechendes Verfahren.

Ein derartiges Verfahren bzw. eine derartige Vorrichtung ist aus der DE 37 42 312 bekannt. In dieser Druckschrift wird ein Tiefentladeschutz für eine Starterbatterie beschrieben, durch den nach abgezogenem Zündschlüssel eine Tiefentladung der Starterbatterie durch versehentlich oder bewußt eingeschaltet belassene Bordnetzverbraucher zuverlässig verhindert wird. Nach abgezogenem Zündschlüssel wird automatisch eine Batteriespannungsmessung des Fahrzeugs aktiviert, und bei Unterschreitung einer gewissen Spannungsgrenze wird das gesamte Bordnetz über ein Lastrelais abgetrennt, so daß die Bordnetzverbraucher von einem Standardbetriebszustand in einen ausgeschalteten Zustand überführt werden. Die Spannungsgrenze ist dabei so gewählt, daß einerseits eine möglichst lange Stromentnahme durch das Bordnetz gegeben ist, andererseits für den nächsten Start noch ausreichende Energiereserven sichergestellt sind. Wenn die Spannungsgrenze derartig niedrig gewählt wird, führt nahezu jede längere Standphase zu einer fast vollständigen Entladung der Batterie, die in den Betriebsphasen des Fahrzeugs, die auf die Standphasen folgen, wieder aufgeladen wird. Häufige Wiederholungen dieses Entlade- und Ladeprozesses führen jedoch zu einer deutlichen Verkürzung der Lebensdauer der Starterbatterie. Um diese Verkürzung der Lebensdauer zu verhindern, könnte man die Spannungsgrenze entsprechend höher setzten. Dies würde jedoch dazu führen, daß relativ früh nach dem Abstellen des Fahrzeugs zahlreiche Komfort- oder auch Sicherheitsverbraucher abgestellt werden, die unter Umständen äußerst wichtige Funktionen erfüllen, wie beispielsweise eine Diebstahlsicherung, ein Infotainment, eine elektrische Bremse etc.. Möchte der Fahrer nicht auf den Betrieb dieser Verbraucher verzichten, kann er im Falle einer relativ hohen Spannungsgrenze sein Fahrzeug nur für einen kurzen Zeitraum abstellen.

Demgemäß ist es Aufgabe der Erfindung, eine Vorrichtung bzw. ein Verfahren zur Reduzierung des Ruhestromverbrauchs in einem abgestellten Fahrzeug derart weiterzubilden, daß die Vorrichtung bzw. das Verfahren eine höhere Flexibilität gewährleistet und den aktuellen Bedingungen und den besonderen Wünschen des Fahrers optimal angepaßt werden kann.

Diese Aufgabe wird durch eine gattungsgemäße Vorrichtung zur Reduzierung des Ruhestromverbrauchs in einem abgestellten Fahrzeug gelöst, wobei die Vorrichtung ein Telematikmodul aufweist, das eine Empfangseinheit umfaßt, durch die von einem externen Sender ein Signal empfangbar ist, wobei das Telematikmodul durch den Empfang des Signals aktivierbar ist, wobei das Steuerelement durch das aktivierte Telematikmodul aktivierbar ist und die in dem Steuerelement abgelegte Befehlssequenz durch das aktivierte Steuerelement ausführbar ist. Das hat zur Folge, daß mindestens ein elektrischer Verbraucher von einem Standardbetriebszustand in einen Betriebszustand mit einem geringeren Stromverbrauch und/oder in einen ausgeschalteten Zustand überführbar ist. Der Fahrer kann folglich unabhängig von seinem Aufenthaltsort bestimmen, ob ein elektrischer Verbraucher ausgeschaltet werden soll oder in einen Betriebszustand mit einem geringeren Stromverbrauch versetzt werden soll, um den Gesamtstromverbrauch zu reduzieren und einen Ladungszustand der Starterbatterie zu gewährleisten, der einen sicheren Motorstart erlaubt. Gleichermaßen kann der Fahrer erreichen, daß bestimmte elektrische Verbraucher so lange wie möglich eingeschaltet bleiben, um bestimmte Sicherheits- oder Komfortfunktionen, die der Fahrer für besonders wichtig erachtet, auszuüben.

In einer ersten vorteilhaften Weiterbildung der Erfindung ist als Sender ein Telefon, insbesondere ein Mobiltelefon oder ein Festnetztelefon einsetzbar, so daß der Fahrer oder auch ein anderer Befugter bequem die Aktivierung des Steuerelementes erreichen kann. Das dafür notwendige Signal ist vorteilhafterweise durch Eingabe einer vorbestimmten Folge von Buchstaben und/oder Ziffern erzeugbar. Durch die Eingabe unterschiedlicher Buchstaben - oder Ziffernfolgen können auch unterschiedliche Signale erzeugbar sein, durch die unterschiedliche Verbraucher von einem Standardbetriebszustand in einen Betriebszustand mit einem geringeren Stromverbrauch und/oder in einen ausgeschalteten Zustand überführbar sind.

Eine weitere Ausgestaltung der Erfindung sieht vor, daß die Vorrichtung eine Kontrolleinheit aufweist, durch die ein Batterieladungszustand einer Starterbatterie des Fahrzeugs ermittelbar ist, wobei die Kontrolleinheit eine Vergleichseinheit zum Vergleich des Batterieladungszustands mit einem Batterieladungszustandsgrenzwert aufweist, wobei das Steuerelement durch die Kontrolleinheit in einen aktivierbaren Zustand versetzbar ist, wenn der Batterieladungszustand unter einem Batterieladungszustandsgrenzwert liegt. Auf diese Weise wird verhindert, daß der Fahrer oder eine andere befugte Person das Ausschalten mindestens eines elektrischen Verbrauchers oder das Überführen in einen Betriebszustand mit einem geringeren Stromverbrauch veranlaßt, ohne daß dafür eine Notwendigkeit besteht, weil die Batterie noch nahezu vollständig geladen ist.

In einer alternativen Ausführungsform weist die Vorrichtung ebenfalls eine Kontrolleinheit auf, durch die ein Batterieladungszustand einer Starterbatterie des Fahrzeugs ermittelbar ist, wobei die Kontrolleinheit eine Vergleichseinheit zum Vergleich des Batterieladungszustands mit einem Batterieladungszustandsgrenzwert aufweist, wobei das Steuerelement durch die Kontrolleinheit in einen aktivierten Zustand versetzbar ist, wenn der Batterieladungszustand unter einem Batterieladungszustandsgrenzwert liegt.

Das hat zur Folge, daß mindestens ein elektrischer Verbraucher von einem Standardbetriebszustand in einen Betriebszustand mit einem geringeren Stromverbrauch und/oder in einen ausgeschalteten Zustand überführbar ist. Mit dieser Ausführungsform der Erfindung kann verhindert werden, daß die Starterbatterie derartig entladen wird, daß ein Motorstart nicht mehr möglich ist, wenn der Fahrer beispielsweise vergißt, rechtzeitig ein Signal zu übermitteln.

Die obige Aufgabe wird auch gelöst durch ein Verfahren zur Reduzierung des Ruhestromverbrauchs in einem abgestellten Fahrzeug, in dem zunächst ein Signal von einem externen Sender empfangen wird und durch das empfangene Signal ein Telematikmodul aktiviert wird. Durch das aktivierte Telematikmodul wird ein Steuerelement aktiviert, durch das mindestens ein elektrischer Verbraucher von einem Standardbetriebszustand in einen Betriebszustand mit einem geringeren Stromverbrauch und/oder in einen ausgeschalteten Zustand überführt wird.

Außerdem können die bereits oben im Zusammenhang mit der erfindungsgemäßen Vorrichtung erwähnten Funktionen bei dem erfindungsgemäßen Verfahren realisiert sein.

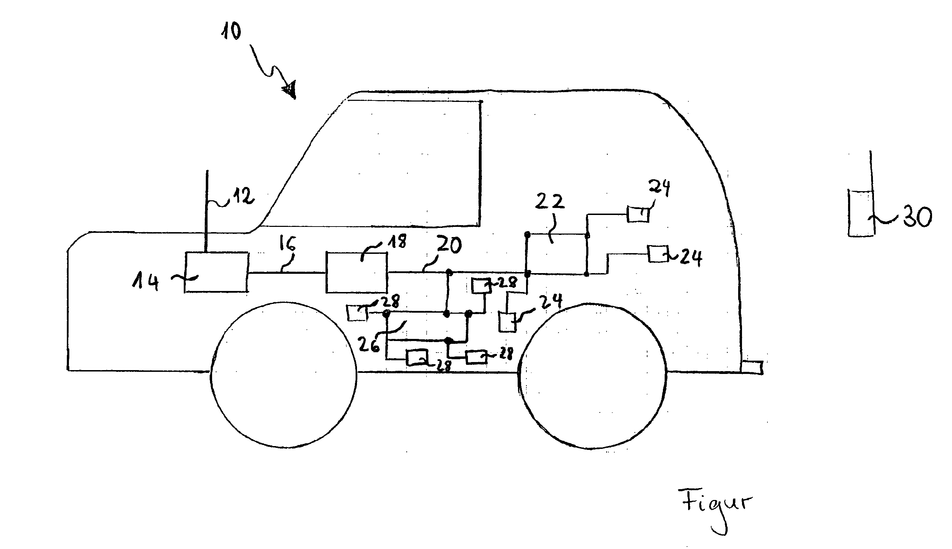

Weitere Vorteile gehen aus den im folgenden unter Hinweis auf die beigefügte Zeichnung beschriebenen Ausführungsbeispielen hervor.
- Die Figur: zeigt eine schematische Darstellung einer Ausführungsform einer erfindungsgemäßen Vorrichtung zur Reduzierung des Ruhestromverbrauchs in einem abgestellten Fahrzeug.

In der Figur ist eine erste Ausführungsform der erfindungsgemäßen Vorrichtung zur Reduzierung des Ruhestromverbrauchs in einem abgestellten Fahrzeug 10 schematisch dargestellt. Die Vorrichtung weist in dieser Ausführungsform eine Antenne 12 auf, mit deren Hilfe ein Signal von einem externen Sender 30, beispielsweise einem Mobiltelefon, empfangen werden kann und an ein Telematikmodul 14 innerhalb einer Telematikanlage weitergeleitet werden kann. Das empfangsbereite Telematikmodul 14 wird durch den Empfang des Signals aktiviert. Da das Telematikmodul 14 über einen Gateway 16 mit einem Steuerelement 18 verbunden ist, kann durch das aktivierte Telematikmodul 14 auch das Steuerelement 18 aktiviert werden. In dem Steuerelement 18, das in der Regel von einem Batteriesteuergerät gebildet wird, ist in einem Speicherelement eine Befehlssequenz abgelegt, die nach Aktivierung des Steuerelements 18 ausgeführt wird. Die Befehle der Befehlssequenz führen dazu, daß das Fahrzeug in einen Ruhestromsparmodus überführt wird, in dem über ein Controller Area Network 20 (CAN) und einen beispielhaft gewählten Sicherheitsbus 22 einerseits elektrische Verbraucher 24, die für die Sicherheit relevant sind, von einem Standardbetriebszustand in einen Betriebszustand mit einem geringeren Stromverbrauch oder in einen ausgeschalteten Zustand überführt werden. Andererseits werden über das Controller Area Network 20 und einen ebenfalls beispielhaft gewählten Komfortbus 26 elektrische Verbraucher 28, die für den Komfort relevant sind, von einem Standardbetriebszustand in einen Betriebszustand mit einem geringeren Stromverbrauch und/oder in einen ausgeschalteten Zustand überführt. Besonders diese elektrischen Verbraucher 24 und 28, zu denen unter anderem eine Klimaanlage, ein Infotainment, eine elektrische Bremse, eine Innenraumüberwachung, ein Neigungssensor, ein Empfänger und ein Sender etc. gehören können, führen dazu, daß der Strombedarf in Standphasen des Fahrzeugs erheblich ist und daß bei normalem Betrieb der Verbraucher 24 und 28 und längeren Standzeiten eine vollständige Entladung der Batterien eintreten kann. Wird das Fahrzeug hingegen mit Hilfe der erfindungsgemäßen Vorrichtung durch ein Signal eines externen Senders 30 in einen Ruhestromsparmodus überführt, kann die Entladung der Batterien verhindert werden und ein erfolgreicher Motorstart auch nach längeren Standzeiten gewährleistet werden.

In einer alternativen, nicht dargestellten Ausführungsform kann das Steuerelement mit einer Kontrolleinheit gekoppelt sein, durch die ein Batterieladungszustand einer Starterbatterie des Fahrzeugs ermittelbar und mit Hilfe einer Vergleichseinheit mit einem Batterieladungszustandsgrenzwert vergleichbar ist. Nur dann, wenn der durch die Kontrolleinheit ermittelte Batterieladungszustand über dem Batterieladungszustandsgrenzwert liegt, wird das Steuerelement in einen aktivierbaren Zustand versetzt, aus dem heraus es durch das aktivierte Telematikmodul aktiviert werden kann.

In einer weiteren alternativer Ausführungsform der erfindungsgemäßen Vorrichtung kann das Steuerelement nicht nur durch das aktivierte Telematikmodul, sondern auch durch das Kontrollelement direkt aktiviert werden, wenn durch dieses festgestellt wurde, daß der Batterieladungszustand einer Starterbatterie unter einem Batterieladungszustandswert liegt.

Weitere Veränderungen, Modifikationen oder Kombinationen der oben beschriebenen Ausführungsformen sind für den Fachmann offensichtlich und fallen ebenso unter den Schutzumfang der beigefügten Ansprüche.

## Patentansprüche

1. Vorrichtung zur Reduzierung des Ruhestromverbrauchs in einem abgestellten Fahrzeug, wobei die Vorrichtung ein Steuerelement (18) zur Kontrolle eines Betriebszustands mindestens eines elektrischen Verbrauchers (24, 28) aufweist, wobei in dem Steuerelement (18) eine Befehlssequenz abgelegt ist, durch die der mindestens eine elektrische Verbraucher (24, 28) von einem Standardbetriebszustand in einen Betriebszustand mit einem geringeren Stromverbrauch und/oder in einen ausgeschalteten Zustand überführbar ist,
**dadurch gekennzeichnet,**
**daß** die Vorrichtung ein Telematikmodul (14) aufweist, das eine Empfangseinheit (12) umfaßt, durch die von einem externen Sender (30) ein Signal empfangbar ist, wobei das Telematikmodul (14) durch den Empfang des Signals aktivierbar ist, wobei das Steuerelement (18) durch das aktivierte Telematikmodul (14) aktivierbar und die in dem Steuerelement (18) abgelegte Befehlssequenz durch das aktivierte Steuerelement (18) ausführbar ist.

2. Vorrichtung nach Anspruch 1,
**dadurch gekennzeichnet,**
**daß** als Sender (30) ein Telefon, insbesondere ein Mobiltelefon oder ein Festnetztelefon, einsetzbar ist.

3. Vorrichtung nach Anspruch 2,
**dadurch gekennzeichnet,**
**daß** das Signal durch Eingabe einer vorbestimmten Folge von Buchstaben und/oder Ziffern erzeugbar ist.

4. Vorrichtung nach einem der vorhergehenden Ansprüche,
**dadurch gekennzeichnet,**
**daß** die Vorrichtung eine Kontrolleinheit aufweist, durch die ein Batterieladungszustand einer Starterbatterie des Fahrzeugs ermittelbar ist, wobei die Kontrolleinheit eine Vergleichseinheit zum Vergleich des Batterieladungszustands mit einem Batterieladungszustandsgrenzwert aufweist, wobei das Steuerelement (18) durch die Kontrolleinheit in einen aktivierten oder in einen aktivierbaren Zustand versetzbar ist, wenn der Batterieladungszustand unter einem Batterieladungszustandsgrenzwert liegt.

5. Verfahren zur Reduzierung des Ruhestromverbrauchs in einem abgestellten Fahrzeug, folgende Schritte umfassend:
a) Empfangen eines Signals von einem externen Sender (30) und Aktivieren eines Telematikmoduls (14) durch das empfangene Signal;
b) Aktivieren eines Steuerelementes (18) durch das aktivierte Telematikmodul (14); und
c) Überführen mindestens eines elektrischen Verbrauchers (24, 28) von einem Standardbetriebszustand in einen Betriebszustand mit einem geringeren Stromverbrauch und/oder in einen ausgeschalteten Zustand durch das aktivierte Steuerelement (18).

6. Verfahren nach Anspruch 5,
**dadurch gekennzeichnet,**
**daß** als externer Sender (30) ein Telefon, insbesondere ein Mobiltelefon oder ein Festnetztelefon, eingesetzt wird.

7. Verfahren nach Anspruch 6,
**dadurch gekennzeichnet,**
**daß** das Signal durch Eingabe eine vorbestimmten Folge von Ziffern und/oder Buchstaben erzeugt wird.

8. Verfahren nach einem der Ansprüche 5 bis 7,
**dadurch gekennzeichnet,**
**daß** das Verfahren weiterhin folgenden Schritt umfaßt:
- Ermitteln eines Batterieladungszustands einer Starterbatterie und Überführen des Steuerelements (18) in einen aktivierten oder in einen aktivierbaren Zustand, wenn der Batterieladungszustand unter einem Batterieladungszustandsgrenzwert liegt.
